# EUROPEAN PATENT APPLICATION

(11) **EP 3 957 175 A1**
(43) Date of publication of application: **23.02.2022**
(21) Application number: 21191575.6
(22) Date of filing: 16.08.2021
(51) Int. Cl.: A01N 25/34, A01P 1/00, A01N 59/16, A01N 59/20

(54) **ANTIMICROBIAL CHROMIUM ELECTROPLATING**

(30) Priority: 17.08.2020 US 202063066665 P; 12.08.2021 US 202117400682
(71) Applicant: Vapor Technologies, Inc., Longmont CO 80503 (US)
(72) Inventor: ANTON, Bryce Randolph, Longmont, 80503 (US); SULLIVAN, Patrick A., Longmont, 80504 (US)
(74) Representative: Beck Greener LLP

(57) **Abstract**

A bioactive coated substrate includes a base substrate, a bioactive metal-containing layer disposed over the base substrate, and an electroplated chromium layer disposed on the bioactive metal-containing layer. The electroplated chromium layer defines a plurality of cracks or pores that expose the bioactive metal-containing layer.

## Description

This application claims the benefit of U.S. provisional application Serial No. 63/066,665 filed August 17, 2020 and also claims priority to U.S. patent application Serial No. 17/400,682 filed August 12, 2021, the disclosures of which are hereby incorporated in their entireties by reference herein.

In at least one aspect, the present invention relates to a bioactive coated substrate with bioactive properties and having at least one electroplated layer.

Generally, copper and copper alloys with over 60% copper have been shown to have antimicrobial properties. However, copper and copper alloys are relatively soft and prone to oxidation/corrosion. Some research supports the theory that the efficacy of copper alloys against microbes scales with the tendency to corrode. Therefore, it is believed that the tendency to corrode correlates with the effectiveness of killing microbes.

Oxides of copper include cuprous oxide (C_{U2}O, cuprite) and cupric oxide (CuO, tenorite). Both are p-type semiconductors and transition metal oxides (TMO), thin films of which have a variety of uses, including electronic devices, catalysts, sensors, and solar cell absorbers. Oxides of copper tend to be more chemically stable and harder than copper metal.

Accordingly, there is a need for antimicrobial coatings with improved corrosion resistance and durability.

In at least one aspect, a bioactive coated substrate is provided. The bioaction substrate includes a base substrate, a bioactive metal-containing layer disposed over the base substrate, and an electroplated chromium layer disposed on the bioactive metal-containing layer. The electroplated chromium layer defines a plurality of cracks or pores that expose the bioactive metal-containing layer.

In another aspect, a method of producing a bioactive coated substrate is provided. The method includes a step of providing a base substrate and depositing a bioactive layer over the base substrate. An electroplated chromium layer is formed by electroplating chromium layer over the bioactive metal-containing layer. Characteristically, the electroplated chromium layer defining a plurality of cracks or pores that expose the bioactive metal-containing layer.

According to a first aspect of the present invention, there is provided a bioactive coated substrate comprising: a base substrate; a bioactive metal-containing layer disposed over the base substrate; and an electroplated chromium layer disposed on the bioactive metal-containing layer, the electroplated chromium layer defining a plurality of cracks or pores that expose the bioactive metal-containing layer.

In one embodiment, the bioactive metal-containing layer is a bioactive copper-containing layer.

In one embodiment, the bioactive copper-containing layer includes a component selected from the group consisting of copper metal, copper alloy, copper oxide, and combinations thereof.

In one embodiment, the bioactive metal-containing layer is a bioactive silver layer.

In one embodiment, the plurality of cracks or pores has a width of about 50 nm to 500 nm.

In one embodiment, the plurality of cracks or pores extends a distance from about 100 nm to 1 micron in an orthogonal direction to the width.

In one embodiment, the bioactive metal-containing layer has a thickness from about 50 to 1500 nm and the electroplated chromium layer has a thickness from about 50 to 1500 nm.

In one embodiment, further comprising a base layer interposed between the base substrate and the bioactive metal-containing layer.

In one embodiment, the base layer has a thickness from about 1000 to 35000 nm.

In one embodiment, the base layer is nickel.

In one embodiment, further comprising a bioactive metal disposed in the cracks or pores.

In one embodiment, the bioactive metal is copper metal or silver metal.

In one embodiment, further comprising a metal oxide disposed in the cracks or pores.

In one embodiment, the metal oxide is copper oxide or silver oxide.

In one embodiment, further comprising metal oxide regions disposed in the bioactive metal-containing layer at locations proximate to the cracks or pores.

In one embodiment, the metal oxide regions are copper oxide regions or silver oxide regions.

In one embodiment, the metal oxide regions extend at a distance from 50 to 200 nm from the cracks or pores.

In one embodiment, the cracks or pores are present in a density of at least 30 cracks or pores/mm in any direction parallel to a surface of the electroplated chromium layer.

In one embodiment, the cracks or pores are present in a density of at least 100 cracks or pores/mm in any direction parallel to a surface of the electroplated chromium layer.

In one embodiment, the cracks or pores are present in a density from about 30 cracks or pores/mm to 30 cracks or pores/mm in any direction parallel to a surface of the electroplated chromium layer.

In one embodiment, the base substrate is composed of a metal, a metal alloy, or a polymer.

In one embodiment, the base substrate includes brass or zinc.

In one embodiment, the base substrate includes acrylonitrile butadiene styrene.

According to a second aspect of the present invention, there is provided a method of producing a bioactive coated substrate comprising: providing a base substrate; depositing a bioactive metal-containing layer over the base substrate; and electroplating a chromium layer over the bioactive metal-containing layer to form an electroplated chromium layer, the electroplated chromium layer defining a plurality of cracks and/or pores that expose the bioactive metal-containing layer.

In one embodiment, wherein the bioactive metal-containing layer is a bioactive copper-containing layer.

In one embodiment, the bioactive copper-containing layer includes a component selected from the group consisting of copper metal, copper alloy, copper oxide, and combinations thereof.

In one embodiment, the bioactive metal-containing layer is a bioactive silver layer.

In one embodiment, the plurality of cracks and/or pores has width of about 50 nm to 500 nm.

In one embodiment, further comprising depositing a bioactive metal in the cracks and/or pores.

In one embodiment, further comprising oxidizing the bioactive metal in the cracks and/or pores.

In one embodiment, further comprising oxidizing the bioactive metal-containing layer at locations proximate to the cracks and/or pores.

The foregoing summary is illustrative only and is not intended to be in any way limiting. In addition to the illustrative aspects, embodiments, and features described above, further aspects, embodiments, and features will become apparent by reference to the drawings and the following detailed description.

For a further understanding of the nature, objects, and advantages of the present disclosure, reference should be had to the following detailed description, read in conjunction with the following drawings, wherein like reference numerals denote like elements and wherein:
FIGURE 1. Schematic cross-section of a bioactive coated substrate having a top layer with cracks and/or pores.
FIGURE 2A. Schematic cross-section of a bioactive coated substrate having a top layer with cracks and/or pores filled with copper.
FIGURE 2B. Schematic cross-section of a bioactive coated substrate having a top layer with cracks and/or pores filled with copper oxide.
FIGURE 3. Schematic cross-section of a bioactive coated substrate having a top layer with cracks and/or pores with copper oxide regions near the cracks and/or pores with the bioactive metal-containing layer.
FIGURE 4A. Schematic cross-section of a bioactive coated substrate having a top layer with cracks and/or pores filled with copper.
FIGURE 4B. Schematic cross-section of a bioactive coated substrate having a top layer with cracks and/or pores filled with copper oxide.
FIGURE 5. Schematic flowchart showing the fabrication of the bioactive coated substrates of Figures 1, 2A, 2B, and 3.
FIGURE 6. Schematic flowchart showing the fabrication of the bioactive coated substrates of Figures 4A and 4B.

Reference will now be made in detail to presently preferred compositions, embodiments, and methods of the present invention, which constitute the best modes of practicing the invention presently known to the inventors. The Figures are not necessarily to scale. However, it is to be understood that the disclosed embodiments are merely exemplary of the invention that may be embodied in various and alternative forms. Therefore, specific details disclosed herein are not to be interpreted as limiting, but merely as a representative basis for any aspect of the invention and/or as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the term "polymer" includes "oligomer," "copolymer," "terpolymer," and the like; molecular weights provided for any polymers refers to weight average molecular weight unless otherwise indicated; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- 5, i.e., the range from 95 to 105. Generally, when the term "about" is used, it can be expected that similar results or effects according to the invention can be obtained within a range of +/- 5% of the indicated value.

As used herein, the term "and/or" means that either all or only one of the elements of the said group may be present. For example, "A and/or B" shall mean "only A, or only B, or both A and B." In the case of "only A," the term also covers the possibility that B is absent, i.e. "only A, but not B."

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

The term "comprising" is synonymous with "including," "having," "containing," or "characterized by." These terms are inclusive and open-ended and do not exclude additional, unrecited elements or method steps.

The phrase "consisting of' excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of' limits the scope of a claim to the specified materials or steps, plus those that do not materially affect the basic and novel characteristic(s) of the claimed subject matter.

The phrase "composed of' means "including" or "consisting of." Typically, this phrase is used to denote that an object is formed from a material.

With respect to the terms "comprising," "consisting of," and "consisting essentially of," where one of these three terms is used herein, the presently disclosed and claimed subject matter can include the use of either of the other two terms.

The term "one or more" means "at least one," and the term "at least one" means "one or more." The terms "one or more" and "at least one" include "plurality" as a subset.

The term "substantially," "generally," or "about" may be used herein to describe disclosed or claimed embodiments. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4.... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

For all compounds expressed as an empirical chemical formula with a plurality of letters and numeric subscripts (e.g., CH₂O), values of the subscripts can be plus or minus 50 percent of the values indicated rounded to or truncated to two significant figures. For example, if CH₂O is indicated, a compound of formula C_{(0.8-1.2)}H_{(1.6-2.4})O(_{0.8-1.2}). In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

Throughout this application, where publications are referenced, the disclosures of these publications in their entireties are hereby incorporated by reference into this application to more fully describe the state of the art to which this invention pertains.

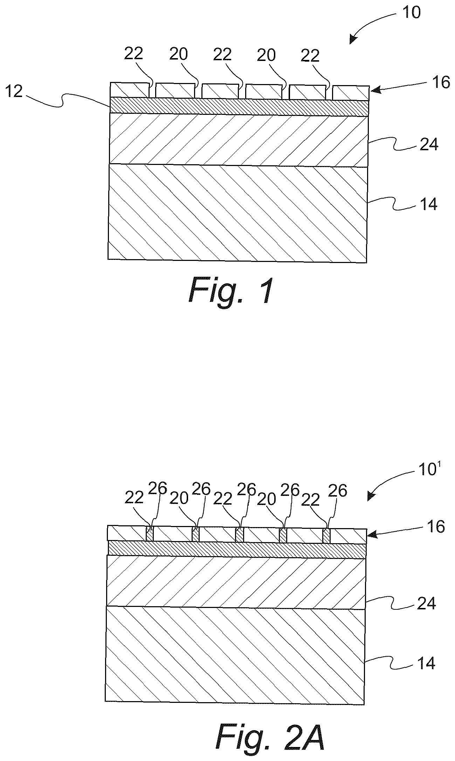

With reference to Figure 1, a schematic cross-section of a bioactive coated substrate is provided. Bioactive coated substrate 10 includes base layer 24 disposed over base substrate 14. A bioactive metal-containing layer 12 is disposed over base substrate 14 and base layer 24 when present. In a refinement, bioactive metal-containing layer 12 contacts bioactive coated substrate 10. In another refinement, bioactive metal-containing layer 12 contacts base layer 24. Electroplated chromium layer 16 is disposed on the bioactive metal-containing layer 12. In a refinement, electroplated chromium layer 16 contacts bioactive metal-containing layer 12. Typically, the bioactive metal-containing layer 12 has a thickness from about 50 to 1500 nm, and the electroplated chromium layer has a thickness from about 50 to 1500 nm. Characteristically, the electroplated chromium layer 16 defines a plurality of cracks 20 and/or pores 22 that expose the bioactive metal-containing layer. In a variation, the cracks 20 and/or pores 22 are present in a density of at least 30 cracks or pores/mm in any direction parallel to a surface of the electroplated chromium layer. In a refinement, the cracks 20 and/or pores 22 are present in a density of at least 100 cracks or pores/mm in any direction parallel to a surface of the electroplated chromium layer. In another refinement, the cracks or pores are present in a density from about 30 cracks or pores/mm to 30 cracks or pores/mm in any direction parallel to a surface of the electroplated chromium layer.

In a variation, the plurality of cracks or pores has a width of about 50 nm to 500 nm. In a refinement, the plurality of cracks or pores extends a distance from about 100 nm to 1 micron in an orthogonal direction to the width. Cracks can be distinguished from pores as follows. In pores, the distance that extends in an orthogonal direction to the width is less than or equal to three times the width, while in cracks, this distance is over three times the width.

In a refinement, the bioactive metal-containing layer 12 is a bioactive copper-containing layer. In a further refinement, the bioactive copper-containing layer is composed of a component selected from the group consisting of copper metal, copper alloy, copper oxide, and combinations thereof. The copper oxide can be CuO, Cu₂O, or combinations thereof. In another refinement, the bioactive layer 12 is a bioactive silver layer. In a further refinement, the bioactive silver layer can be deposited by electroplating.

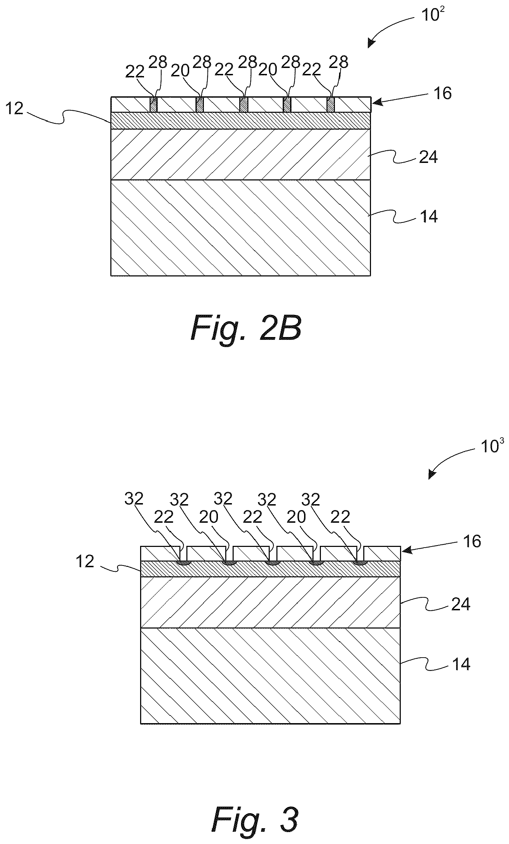

With reference to Figures 2A and 2B, schematic cross-sections of a bioactive coated substrate having bioactive material disposed in (e.g., deposited in) the cracks and pores are provided. Bioactive coated substrate 10¹ optionally includes base layer 24 disposed over the base substrate 14. Bioactive metal-containing layer 12 disposed over the base substrate 14 and optional base layer 24 if present. Electroplated chromium layer 16 is disposed on the bioactive metal-containing layer. As set forth above, the electroplated chromium layer defining a plurality of cracks 20 and/or pores 22 that expose the bioactive copper layer. In this variation, metal plugs 26 are disposed in cracks 20 and/or pores 22. The metal plugs can be copper metal plugs or silver metal plugs. In a refinement, these plugs can be deposited by electroplating. Figure 2B depicts bioactive coated substrate 10² in which metal oxide plugs 28 are positioned in cracks 20 and/or pores 22. The metal oxide plugs can be copper oxide plugs or silver oxide plugs. The copper oxide plugs can be formed by oxidizing copper metal plugs 26. The copper oxide plugs can be CuO, Cu₂O, or combinations thereof. Silver oxide plugs can be Ag₂O. Similarly, the silver oxide plugs can be formed by oxidizing silver metal plugs.

With reference to Figure 3, a schematic cross-section of a bioactive coated substrate having metal oxide regions proximate to the cracks and pores is provided. Bioactive coated substrate 10³ includes optional base layer 24 disposed over the base substrate 14. Bioactive metal-containing layer 12 is disposed over the base substrate 14. In this variation, metal oxide regions 32 are disposed in the bioactive copper layer at locations proximate to the cracks 20 and/or pores 22. In a refinement, the metal oxide regions 32 extend at a distance from 50 to 200 nm from the cracks or pores. The metal oxide regions 32 can be copper oxide regions or silver oxide reactions. Copper oxide regions can be CuO, Cu₂O, or combinations thereof, while silver oxide regions can be Ag₂O.

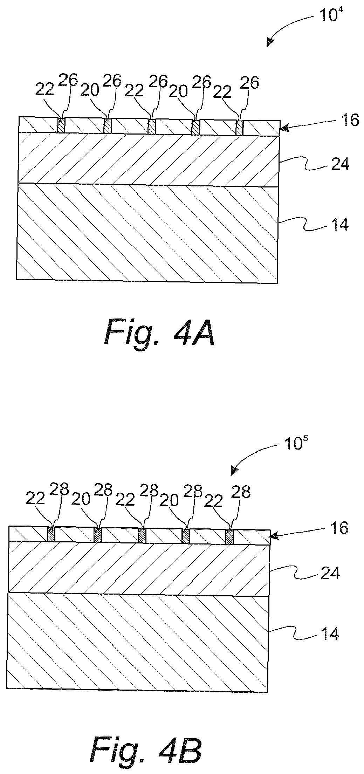

With reference to Figures 4A and 4B, schematic cross-sections of a bioactive coated substrate having bioactive material disposed in the cracks and pores but without a bioactive metal-containing layer is provided. Figure 4A depicts bioactive coated substrate 10⁴ optionally includes base layer 24 disposed over the base substrate 14. Electroplated chromium layer 16 is disposed on the base substrate 14 and base layer 24 if present. As set forth above, the electroplated chromium layer defining a plurality of cracks 20 and/or pores 22 that expose the base substrate or the base layer if that is present. Figure 4A depicts metal plugs 26 disposed in cracks 20 and/or pores 22. As set forth above, the metal plugs 26 can be copper metal plugs or silver metal plugs. Figure 4B depicts bioactive coated substrate 10⁵ in which metal oxide plugs 28 are positioned in cracks 20 and/or pores 22. As set forth above, the metal oxide plugs 28 can be copper oxide plugs or silver oxide plugs. Copper oxide plugs 28 can be formed by oxidizing copper metal plugs. As set forth above, the copper oxide plugs 28 can be CuO, Cu₂O, or combinations thereof. Similarly, silver oxide plugs can be formed by oxidizing silver metal plugs.

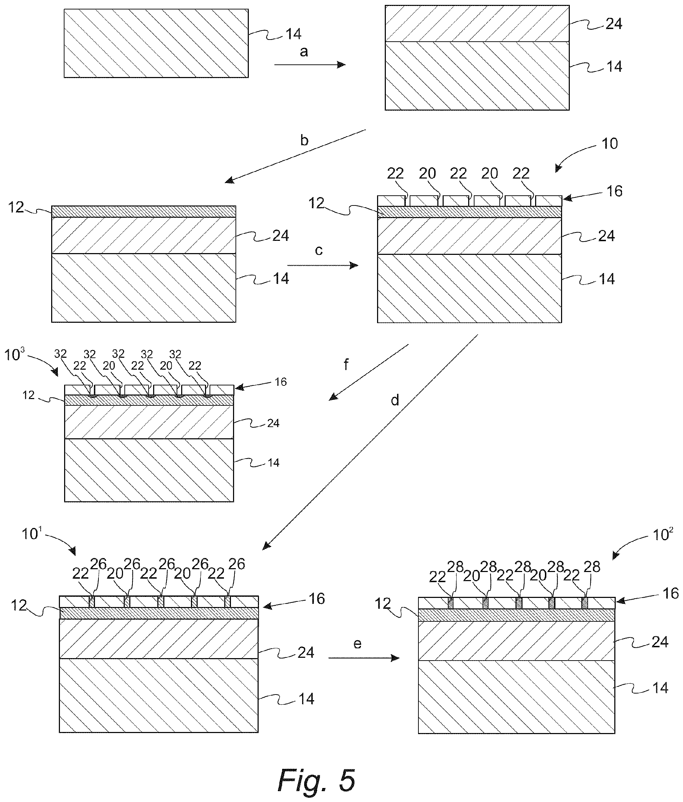

With reference to Figure 5, a flow chart depicting a method of producing the bioactive coated substrate set depicted in Figures 1, 2A, 2B, and 4 is provided. The method includes steps of providing a base substrate. In step a), the base substrate 14 is optionally coated with base layer 24. As set forth above, nickel is an example of a base layer. In a refinement, base layer 24 is formed by electroplating. In step b), bioactive metal-containing layer 12 is deposited over the base substrate 14 and base layer 24 if present to form bioactive coated substrate 10 (Figure 1). In step c), chromium layer 16 is electroplated over the bioactive metal-containing layer 12 to form bioactive coated substrate 10. Characteristically, electroplated chromium layer 16 defines a plurality of cracks 20 and/or pores 22 that expose the bioactive metal-containing layer. In step d), a bioactive metal is deposited into cracks 20 and/or pores 22 to form bioactive coated substrate 10¹ (Figure 2A). In a refinement, the bioactive metal plugs can be deposited into cracks 20 and/or pores 22 by electroplating. The bioactive metal plugs can be silver or copper plugs as set forth above. In step e), bioactive coated substrate 10² (Figure 2B) is formed by oxidizing the bioactive metal (e.g., copper oxide plugs or silver oxide plugs). As set forth above, the copper oxide can be CuO, Cu₂O, or combinations thereof.

Still referring to Figure 5, in step f), metal regions of bioactive metal-containing layer 12 proximate to the cracks 20 and/or pores 22 of bioactive coated substrate 10 are oxidized to form bioactive coated substrate 10² which has metal oxide regions 32. The details of metal oxide regions 32, which can be copper oxide regions or silver oxide regions, are set forth above.

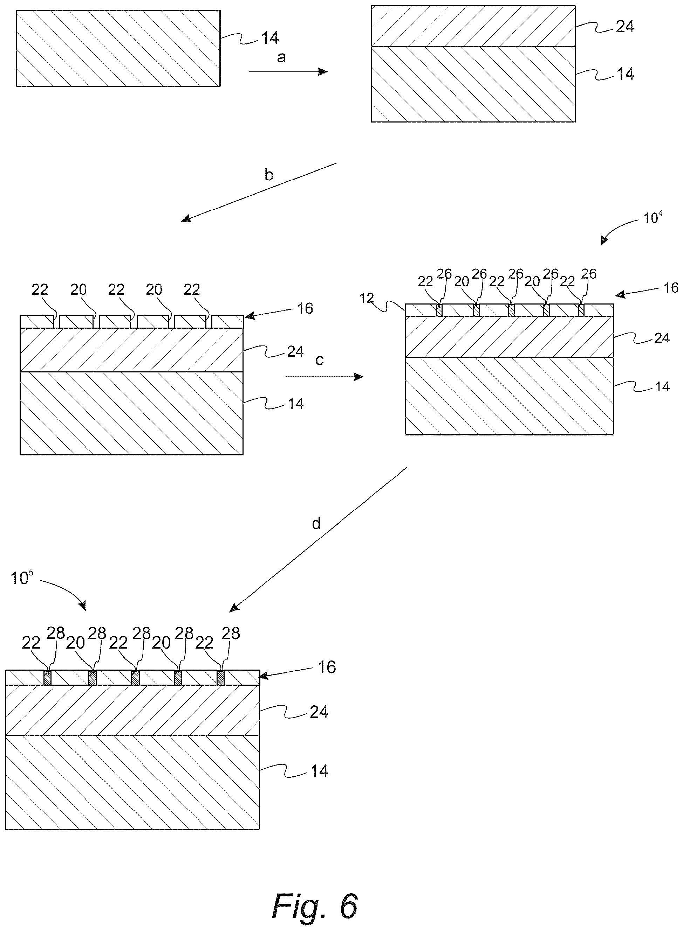

With reference to Figure 6, a flow chart depicting a method of producing the bioactive coated substrate set depicted in Figures 1, 2A, 2B, and 4 is provided. The method includes steps of providing a base substrate. In step a), the base substrate 14 is optionally coated with base layer 24. As set forth above, nickel is an example of a base layer. In a refinement, base layer 14 is formed by electroplating. In step b), chromium layer 16 is electroplated over the base substrate 14 and base layer 24 if present. Characteristically, electroplated chromium layer 16 defines a plurality of cracks 20 and/or pores 22 that expose the bioactive metal-containing layer. In step c), a bioactive metal is deposited into cracks 20 and/or pores 22 to form the bioactive coated substrate 10⁴ (Figure 4A). In a refinement, the bioactive metal plugs 26 can be deposited into cracks 20 and/or pores 22 by electroplating. As set forth above, the bioactive metal plugs 26 can be copper metal plugs or silver metal plugs. In step d), bioactive coated substrate 10⁵ (Figure 4B) is formed by oxidizing the bioactive metal plugs to metal oxide plugs 28. The details of metal oxide plugs 32, which can be copper oxide regions or silver oxide regions, are set forth above.

Figures 1-5 call for a base layer 24 can be optionally interposed between the base substrate 14 and the bioactive metal-containing layer 12. In a refinement, base layer 24 has a thickness from about 1000 to 35000 nm. In a refinement, the base layer is composed of nickel.

Figures 1-5 call for a base substrate that is coated. Although the present invention is not limited to any particular materials that the base substrate is composed of, the base substrate is typically composed of a metal, a metal alloy, or a polymer. In a refinement, base substrate includes brass or zinc. In a further refinement, the base substrate includes acrylonitrile butadiene styrene.

In other embodiments, the bioactive coated substrate of Figures 1, 2A, 2B, 3, 4A, or 4B is included in an article. In a refinement, the useful article further includes an indicator layer, as set forth above. Many healthcare or hospital surfaces may greatly benefit from a bioactive coated substrate. For example, useful articles can include but are not limited to bedrails, footboards, bed-side tables, knobs, handles, safety rails, carts, push plates, kick plates, mop plates, stretcher plates, spigots, drains, sinks, faucets, drain levers, water fountain components, sanitizers/ soap dispensers, hand dryers, commonly used buttons, headrest, showerheads, countertops, hinges, locks, latches, trim, toilet or urinal hardware, light switches, armrest, thermostat controls, telephones, floor tiles, ceiling tiles, wall tiles, instrument handles (e.g. drug delivery systems, monitoring systems, hospital beds, office equipment, operating room equipment, stands and fixtures), IV poles, trays, pans, walkers, wheelchairs, keyboards, computer mouse surfaces, exercise equipment, rehabilitation equipment, physical therapy equipment, lamps, lighting systems, lids, hangers, remotes, cup holders, toothbrush holders, gown snaps, and window sills. Likewise, popular or common areas could benefit from articles with bioactive coated substrates. For example, some articles or surfaces can include but are not limited to shopping carts, shopping cart handles, child seats, handrails, register keypads, register housings, ATMs, lockers, elevator controls, paper towel dispensers, toilet paper dispensers, vending machines, and restroom surfaces. Similar articles and surfaces can benefit in housing areas, mass transit, laboratories, religious gathering facilities, or any commonly visited facilities. Other uses can include but are not limited to writing utensils, eyeglass frames, combs, phone covers, tablet covers, headphones, and bottle openers, to name a few.

The following examples illustrate the various embodiments of the present invention. Those skilled in the art will recognize many variations that are within the spirit of the present invention and the scope of the claims.

### EXAMPLE 1- Microcracked Cr with Copper buried layer on brass

Brass faucets are placed in a conventional soak cleaner bath containing the standard and well-known soaps, detergents, emulsifiers, and the like, which is maintained at a pH of 8.9-9.2 and a temperature of about 145-200°F for 10 minutes. The brass faucets are then placed in a conventional ultrasonic alkaline cleaner bath. The ultrasonic cleaner bath has a pH of 8.9-9.2, is maintained at a temperature of about 160-180° F., and contains the conventional and well-known soaps, detergents, emulsifiers, and the like. After the ultrasonic cleaning, the faucets are rinsed and placed in a conventional alkaline electro-cleaner bath for about 50 seconds. The electro cleaner bath is maintained at a temperature of about 140-180° F., a pH of about 10.5-11.5, and contains standard and conventional detergents. The faucets are then rinsed and placed in a conventional acid activator bath for about 20 seconds. The acid activator bath has a pH of about 2.0-3.0, is at an ambient temperature, and contains a sodium fluoride-based acid salt.

The faucets are then rinsed and placed in a bright nickel-plating bath for about 12 minutes. The bright nickel bath is generally a conventional bath that is maintained at a temperature of about 130-150°F., a pH of about 4.0-4.8, contains NiSO4, NiCl2, boric acid, and brighteners. A bright nickel layer of an average thickness of about 400 millionths (0.0004) of an inch is deposited on the copper layer.

The faucets with the layer of nickel are then rinsed and placed in a conventional and standard acid copper plating bath for about 20 seconds. The acid copper plating bath contains copper sulfate, sulfuric acid, and trace amounts of chloride. The bath is maintained at about 80°F. A copper layer of an average thickness of about 10 millionths (0.00001) of an inch is deposited on the faucets.

The bright nickel and copper-plated faucets are rinsed three times, activated in a low concentration chromium activator bath and then placed in a conventional, commercially available hexavalent chromium plating bath using conventional chromium plating equipment for about seven minutes. The hexavalent chromium bath is a conventional and well-known bath that contains about 32 ounces/gallon of chromic acid. The bath also contains conventional and well-known chromium plating additives. The bath is maintained at a temperature of about 112-116°F and utilizes a mixed sulfate/fluoride catalyst. The chromic acid to sulfate ratio is about 200:1. A chromium layer of about 10 millionths (0.00001) of an inch is deposited on the surface of the bright nickel layer. The faucets are thoroughly rinsed in deionized water and then dried.

### EXAMPLE 2 - Microporous Cr with Copper buried layer on Zinc

Zinc faucets are placed in a conventional soak cleaner bath containing the standard and well-known soaps, detergents, emulsifiers, and the like, which is maintained at a pH of 8.9-9.2 and a temperature of about 145-200°F for 10 minutes. The zinc faucets are then placed in a conventional ultrasonic alkaline cleaner bath. The ultrasonic cleaner bath has a pH of 8.9-9.2, is maintained at a temperature of about 160-180° F., and contains the conventional and well-known soaps, detergents, emulsifiers and the like. After the ultrasonic cleaning, the faucets are rinsed and placed in a conventional alkaline electro-cleaner bath for about 50 seconds. The electro cleaner bath is maintained at a temperature of about 140-180° F., a pH of about 10.5-11.5, and contains standard and conventional detergents. The faucets are then rinsed and placed in a conventional acid activator bath for about 20 seconds. The acid activator bath has a pH of about 2.0-3.0, is at an ambient temperature, and contains a sodium fluoride-based acid salt.

The faucets are then rinsed and placed in a conventional and standard acid copper plating bath for about 14 minutes. The acid copper plating bath contains copper sulfate, sulfuric acid, and trace amounts of chloride. The bath is maintained at about 80°F. A copper layer of an average thickness of about 400 millionths (0.0004) of an inch is deposited on the faucets.

The faucets containing the layer of copper are then rinsed and placed in a bright nickel-plating bath for about 12 minutes. The bright nickel bath is generally a conventional bath that is maintained at a temperature of about 130-150°F., with a pH of about 4.0-4.8, contains NiSO4, NiC12, boric acid, and brighteners. A bright nickel layer of an average thickness of about 400 millionths (0.0004) of an inch is deposited on the copper layer. After the primary Nickel layer is applied, a thinner, secondary Nickel layer is used that includes the addition of inert particulates that will help induce micro-porosity in the final Chromium layer.

The faucets containing the layer of copper and nickel are then rinsed and placed in a conventional and standard acid copper plating bath for about 20 seconds. The acid copper plating bath contains copper sulfate, sulfuric acid, and trace amounts of chloride. The bath is maintained at about 80°F. A copper layer of an average thickness of about 10 millionths (0.00001) of an inch is deposited on the faucets.

The copper, bright nickel and copper plated faucets are rinsed three times, activated in a low concentration chromium activator bath and then placed in a conventional, commercially available hexavalent chromium plating bath using conventional chromium plating equipment for about seven minutes. The hexavalent chromium bath is a conventional and well-known bath that contains about 32 ounces/gallon of chromic acid. The bath also contains conventional and well-known chromium plating additives. The bath is maintained at a temperature of about 112-116°F and utilizes a mixed sulfate/fluoride catalyst. The chromic acid to Sulfate ratio is about 200:1. A chromium layer of about 10 millionths (0.00001) of an inch is deposited on the surface of the bright nickel layer.

The chromium-plated faucets are then rinsed and placed in a conventional and standard acid copper plating bath. The acid copper plating bath contains copper sulfate, sulfuric acid, and trace amounts of chloride. Make the sample anodic at 0.8V for 30 seconds in the copper bath and the switch to cathodic at approximately 0.2 to 0.4V for 60 seconds. The bath is maintained at about 80°F. A copper layer is deposited inside the porosity of the Chromium. The faucets are thoroughly rinsed in deionized water and then dried.

### EXAMPLE 3 - Microporous Cr with Silver buried layer on Stainless Steel

Stainless steel faucets are placed in a conventional soak cleaner bath containing the standard and well-known soaps, detergents, emulsifiers, and the like, which is maintained at a pH of 8.9-9.2 and a temperature of about 145-200°F for 10 minutes. The faucets are then placed in a conventional ultrasonic alkaline cleaner bath. The ultrasonic cleaner bath has a pH of 8.9-9.2, is maintained at a temperature of about 160-180° F, and contains the conventional and well-known soaps, detergents, emulsifiers, and the like. After the ultrasonic cleaning, the faucets are rinsed and placed in a conventional alkaline electro-cleaner bath for about 50 seconds. The electro cleaner bath is maintained at a temperature of about 140-180° F., a pH of about 10.5-11.5, and contains standard and conventional detergents. The faucets are then rinsed and placed in a conventional acid activator bath for about 20 seconds. The acid activator bath has a pH of about 2.0-3.0, is at an ambient temperature, and contains a sodium fluoride-based acid salt. The faucets are then rinsed and placed in a conventional and standard acid copper plating bath for about 14 minutes. The acid copper plating bath contains copper sulfate, sulfuric acid, and trace amounts of chloride. The bath is maintained at about 80°F. A copper layer of an average thickness of about 400 millionths (0.0004) of an inch is deposited on the faucets.

The faucets containing the layer of copper are then rinsed and placed in a bright nickel-plating bath for about 12 minutes. The bright nickel bath is generally a conventional bath which is maintained at a temperature of about 130-150°F., with a pH of about 4.0-4.8, contains NiSO4, NiC12, boric acid, and brighteners. A bright nickel layer of an average thickness of about 400 millionths (0.0004) of an inch is deposited on the copper layer.

The faucets are then rinsed and placed in conventional alkaline silver cyanide or mixed silver/copper plating bath for about 15 minutes. The silver-plating bath contains silver cyanide, potassium cyanide and small amounts of potassium carbonate. pH is kept above 8.0. The bath is typically maintained above 90F. The plating duration is approximately 1 min. to give a thin silver strike deposit of about 1 - 10 millionth of an inch (0.000001). Inert particulates are added to the silver bath to induce microporosity in the subsequent chromium layers.

The copper, bright nickel and silver-plated faucets are rinsed three times, activated in a low concentration chromium activator bath and then placed in a conventional, commercially available hexavalent chromium plating bath using conventional chromium plating equipment for about seven minutes. The hexavalent chromium bath is a conventional and well-known bath that contains about 32 ounces/gallon of chromic acid. The bath also contains conventional and well-known chromium plating additives. The bath is maintained at a temperature of about 112-116°F and utilizes a mixed sulfate/fluoride catalyst. The chromic acid to Sulfate ratio is about 200:1. A chromium layer of about 10 millionths (0.00001) of an inch is deposited on the surface of the bright nickel layer. The faucets are thoroughly rinsed in deionized water and then dried.

While exemplary embodiments are described above, it is not intended that these embodiments describe all possible forms of the invention. Rather, the words used in the specification are words of description rather than limitation, and it is understood that various changes may be made without departing from the invention. Additionally, the features of various implementing embodiments may be combined to form further embodiments of the invention.

## Claims

1. A bioactive coated substrate comprising:
a base substrate;
a bioactive metal-containing layer disposed over the base substrate; and
an electroplated chromium layer disposed on the bioactive metal-containing layer, the electroplated chromium layer defining a plurality of cracks or pores that expose the bioactive metal-containing layer.

2. The bioactive coated substrate of claim 1, wherein the bioactive metal-containing layer has a thickness from about 50 to 1500 nm and the electroplated chromium layer has a thickness from about 50 to 1500 nm.

3. The bioactive coated substrate of claim 1 or 2, further comprising a base layer interposed between the base substrate and the bioactive metal-containing layer.

4. The bioactive coated substrate of claim 3, wherein the base layer has a thickness from about 1000 to 35000 nm and/or the base layer is nickel.

5. The bioactive coated substrate of any one of the preceding claims, further comprising a bioactive metal and/or a metal oxide disposed in the cracks or pores.

6. The bioactive coated substrate of claim 5, wherein the bioactive metal is copper metal or silver metal and/or the metal oxide is copper oxide or silver oxide.

7. The bioactive coated substrate of any one of claims 1 to 4, further comprising metal oxide regions disposed in the bioactive metal-containing layer at locations proximate to the cracks or pores.

8. The bioactive coated substrate of claim 7, wherein the metal oxide regions are copper oxide regions or silver oxide regions and/or wherein the metal oxide regions extend at a distance from 50 to 200 nm from the cracks or pores.

9. The bioactive coated substrate of any one of the preceding claims, wherein the cracks or pores are present in a density of at least 30 cracks or pores/mm in any direction parallel to a surface of the electroplated chromium layer.

10. The bioactive coated substrate of any one of the preceding claims, wherein the base substrate is composed of a metal, a metal alloy, or a polymer.

11. A method of producing a bioactive coated substrate comprising:
providing a base substrate;
depositing a bioactive metal-containing layer over the base substrate; and
electroplating a chromium layer over the bioactive metal-containing layer to form an electroplated chromium layer, the electroplated chromium layer defining a plurality of cracks and/or pores that expose the bioactive metal-containing layer.

12. The method of claim 11 further comprising depositing a bioactive metal in the cracks and/or pores.

13. The method of claim 12, further comprising oxidizing the bioactive metal in the cracks and/or pores.

14. The method of claim 11 further comprising oxidizing the bioactive metal-containing layer at locations proximate to the cracks and/or pores.

15. The bioactive coated substrate of any one of claims 1 to 10 or the method of any one of claims 11 to 14, wherein the bioactive metal-containing layer is a bioactive copper-containing layer or a bioactive silver layer.

16. The bioactive coated substrate or the method of claim 15, wherein the bioactive copper-containing layer includes a component selected from the group consisting of copper metal, copper alloy, copper oxide, and combinations thereof.

17. The bioactive coated substrate of any one of claims 1 to 10 or the method of any one of claims 11 to 14, wherein the plurality of cracks and/or pores has width of about 50 nm to 500 nm.

18. The bioactive coated substrate or the method of claim 17, wherein the plurality of cracks or pores extends a distance from about 100 nm to 1 micron in an orthogonal direction to the width.
